Europäisches Patentamt

European Patent Office

Office européen des brevets

(11) Publication number: 0 331 863
A1

## EUROPEAN PATENT APPLICATION

(21) Application number: 88830093.6

(22) Date of filing: 09.03.88

(51) Int. Cl.⁴: B65G 57/06 , C14B 1/62

(43) Date of publication of application:
13.09.89 Bulletin 89/37

(84) Designated Contracting States:
AT BE CH DE ES FR GB GR LI NL SE

(71) Applicant: NUOVA CETASS S.p.A.
Via Sottopoggio
I-50053 Villanova Empoli (Firenze)(IT)

(72) Inventor: Paglianti, Ovidio
NUOVA CETASS S.p.A Via Sottopoggio
I-20053 Villanova Empol Firenze(IT)

(74) Representative: Cicogna, Franco
Ufficio Internazionale Brevetti Dott.Prof.
Franco Cicogna Via Visconti di Modrone,
14/A
I-20122 Milano(IT)

(54) Apparatus for automatically stacking hide pieces and the like.

(57) The apparatus comprises at least a conveyor belt (1) driven by a driving roller (2) and extending between a front roller (4), displaceable in a horizontal plane, transmission rollers (3) and one or more coplanar rollers (5,6) adapted for sliding on corresponding vertical, or horizontal or slanted planes in a timed relationship with the movement of the front roller (4). The hide piece to be stacked is taken from an upward hide processing apparatus and sent, through a supplying belt, on the conveyor belt (1) which conveys it to a supporting beam provided under the horizontal portion of the conveyor belt (1). As the hide piece center line has reached the beam center line, the conveyor belt (1) is stopped and the rollers supporting it are displaced backward so as to deposit the hide piece on the beam.

FIG. 1

EP 0 331 863 A1

# APPARATUS FOR AUTOMATICALLY STACKING HIDE PIECES AND THE LIKE

## BACKGROUND OF THE INVENTION

The present invention relates to an apparatus for automatically stacking hide pieces and the like on beams or tables.

As is known, during their processing, the hide pieces must be stacked on beams or tables, said hide pieces being supplied by processing apparatus downwardly arranged with respect to the hide pieces stacking apparatus.

Also known is the fact that the known apparatus used for stacking hide pieces, which operate by conveyor belts which horizontally extend, have a comparatively large size.

## SUMMARY OF THE INVENTION

Accordingly, the task of the present invention is to overcome the above mentioned drawback, by providing an apparatus for automatically stacking hide pieces and the like which has a very smaller size than that of known stacking apparatus and which substantially coincides with the size of the beam or table thereon the hide pieces are stacked.

Within the scope of the above mentioned task, a main object of the present invention is to provide an apparatus for automatically stacking hide pieces and the like which does not require any manual operations for stacking said hide pieces.

According to one aspect of the present invention, the above mentioned task and objects, as well as yet other objects, which will become more apparent hereinafter, are achieved by an apparatus for automatically stacking hide pieces and the like, characterized in that it comprises at least an endless conveyor belt driven by a driving roller and extending between a front roller, displaceable in a horizontal plane, and one or more coplanar rollers, adapted for sliding on corresponding vertical, horizontal or slanted planes in a timed way with the movement of said front roller.

In operation, the hide piece to be stacked is taken from the upward processing machine or apparatus by means of different systems and is sent, preferably by means of a supplying belt, to said conveyor belt which carries it to a supporting beam or table arranged under the horizontal portion of said conveyor belt; as the cross center line of the hide piece has reached the center line of the beam of table, the conveyor belt is stopped and the rollers supporting it are displaced backward so as to deposit the hide piece on said beam or table.

## BRIEF DESCRIPTION OF THE DRAWINGS

Further characteristics and advantages of the apparatus for automatically stacking hide pieces and the like on a supporting beam or table according to the present invention, will become more apparent hereinafter from the following detailed description of preferred embodiments of said apparatus, which are illustrated, by way of an indicative but not limitative example in the figures of the accompanying drawings, where:

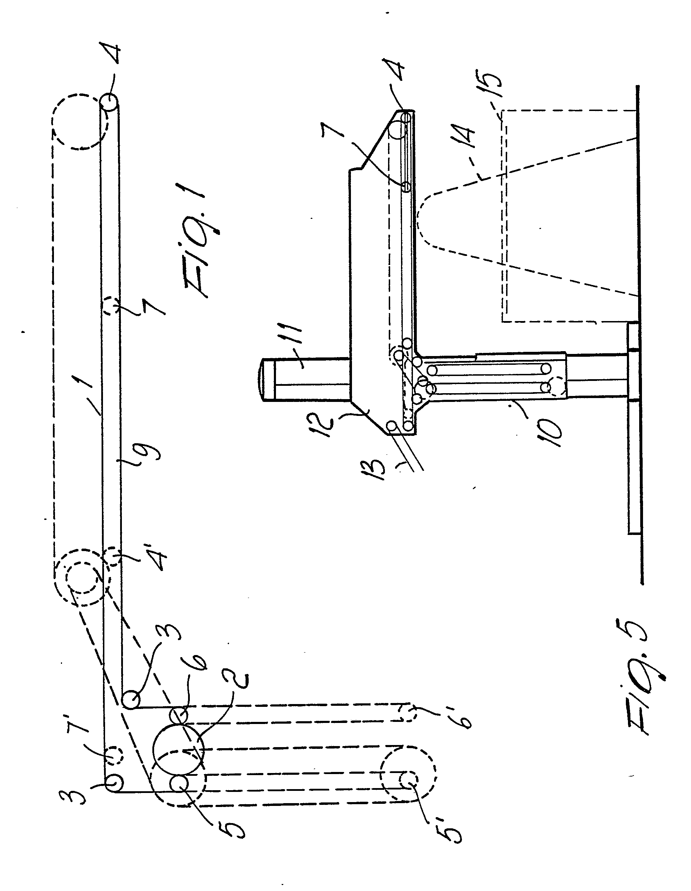

figure 1 is a schematic view illustrating the conveyor belt included in the apparatus according to the present invention and the two end of stroke position assumed by the rollers supporting said conveyor belt;

figures 2, 3 and 4 illustrate some operating mechanisms for reducing to a minimum the apparatus size, one of them being provided with vertical recovery means, a second mechanism being provided with horizontal recovery means and a third mechanism being provided with recovery means slanted at 45° with respect to the horizontal direction, said mechanism including from 1 to n driving shafts;

figure 5 is a schematic elevation view illustrating a hide piece stacking apparatus including a single conveyor belt;

figure 6 is a top view of that same hide piece stacking apparatus;

figure 7 shows two hide piece stacking apparatus according to the present invention arranged in an opposite manner in order to automatically stack very long hide pieces;

figure 8 is a top plan view illustrating a hide piece stacking apparatus according to the present invention including two indipendent conveyor belts arranged with an adjoining relationship.

## DESCRIPTION OF THE PREFERRED EMBODIMENTS

With reference to the figures of the accompanying drawings, the apparatus for automatically stacking hide pieces according to the present invention essentially comprises at least an endless conveyor belt 1, which is driven by a driving roller 2.

The conveyor belt, which slides on two horizontally arranged rollers 3, respectively a transmission roller and a tension roller, extends between a front roller 4 and a pair of coplanar rollers 5 and 6 which are arranged in an adjoining relationship with respect to said driving roller.

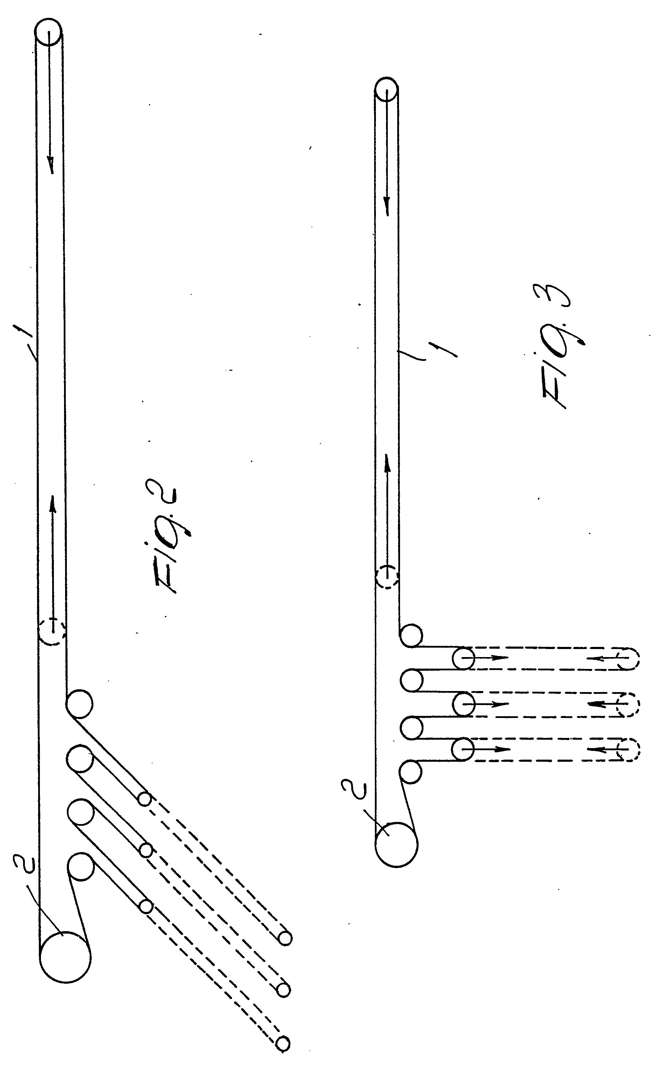

In this connection it should be apparent that, while the invention will be disclosed, for simplicity purposes, with a stacking apparatus including two recovery rollers, the apparatus according to the invention may comprise any number from 1 to n of recovery rollers, as shown in figures 2 to 4.

More specifically, the front roller 4 is so arranged as to provide, in cooperation with a rear roller 7, coplanar therewith, a carriage which can be displaced in a horizontal plane along side guides 8.

The mentioned carriage is driven by chains 9, in turn driven by electrical or hydraulic motors, controlled preferably by photoelectric sensors adapted for detecting the lenght of the hide piece and its position on the conveyor belt.

The two coplanar rollers 5 and 6 adapted for recovering the conveyor belt during the return stroke of the mentioned carriage are in turn caused to carry out a return movement, along corresponding guides, by means of resilient means, either of the mechanical or hydraulic type.

These vertical guides are mounted on tubular structures 10 rigidly coupled to corresponding raising uprights 11 and cantilever-wise bearing walls members 12 for supporting the carriage sliding horizontal guides.

In operation, the hide piece is taken from the hide piece processing upward machine, by means of different systems, and is sent, preferably by means of a supplying belt 13, onto the mentioned conveyor belt 1 which transfers it to the hide piece stacking beam 14 or table 15 arranged under said sidewalls 12.

As the hide piece cross center or middle line has reached the beam or table center or middle line, the conveyor belt is stopped and the mentioned carriage is backward displaced so as to deposit the hide piece on the beam or table.

During this displacement of the carriage, in particular, the length of the conveyor belt 1 is held constant, since, while the rollers 4 and 5 are displaced to the positions 4' and 7', the roller pair 5 and 6 are simultanepusly downward displaced so as to reach the positions 5' and 6'.

This operation, as it should be apparent, is performed as the hide piece must be deposited on the stacking beam or table with the same direction as the supplying direction from the hide piece processing machine or apparatus.

On the other hand, if the hide piece must be reversed, then the carriage forming rollers 4 and 7 must be originally arranged at the positions 4' and 7' and they must be displaced outwardly from the side- walls 12, so as to deposit said hide piece on the stacking beam ir table without causing the hide piece to slide on them.

In this connection it should be pointed out that, in this case, the displacement speed of the carriage and of the mentioned return roller pair must be a half of the speed of the conveyor belt 1.

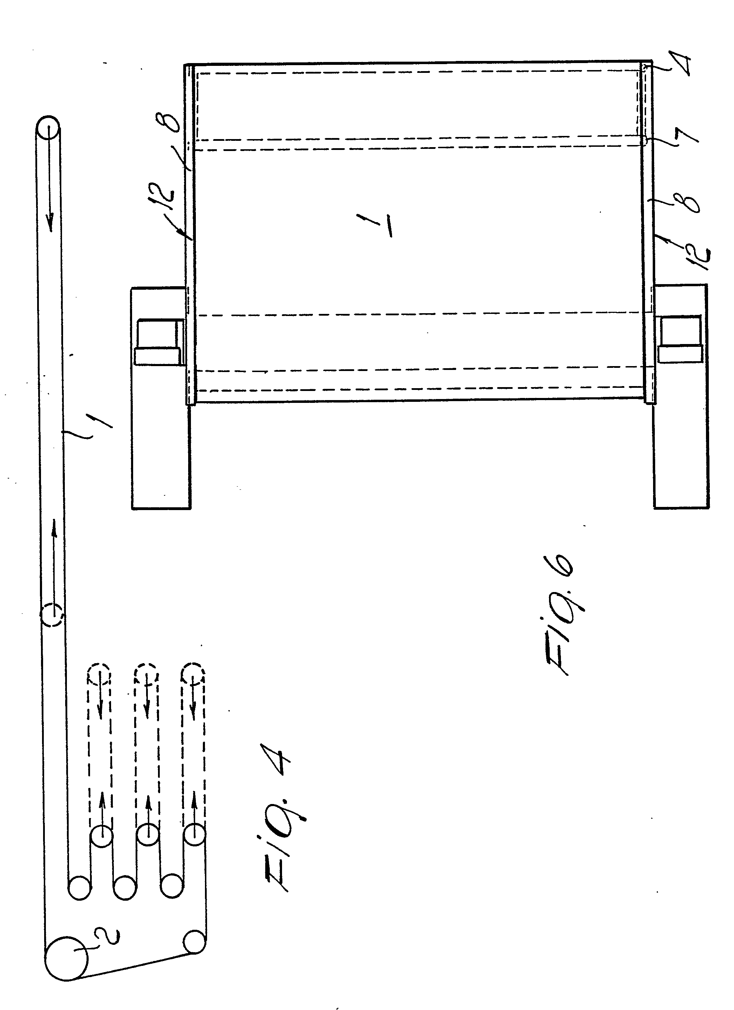

Moreover, as very long hide pieces are to be stacked, with the same direction as the supply direction from the hide piece processing machines, then two hide piece stacking apparatus according to the invention can be used, with an opposite arrangement and tandem mounted, as shown in figure 4.

In this case, both the conveyor belts rotate in the hide piece advancing direction and, as the hide piece arrives, with its cross center or middle line, at the middle line of the underlying beam or table, that is at the symmetry axis of the two apparatus, said conveyor belts are stopped and driven in the opposite direction, so as to properly deposit the hide piece.

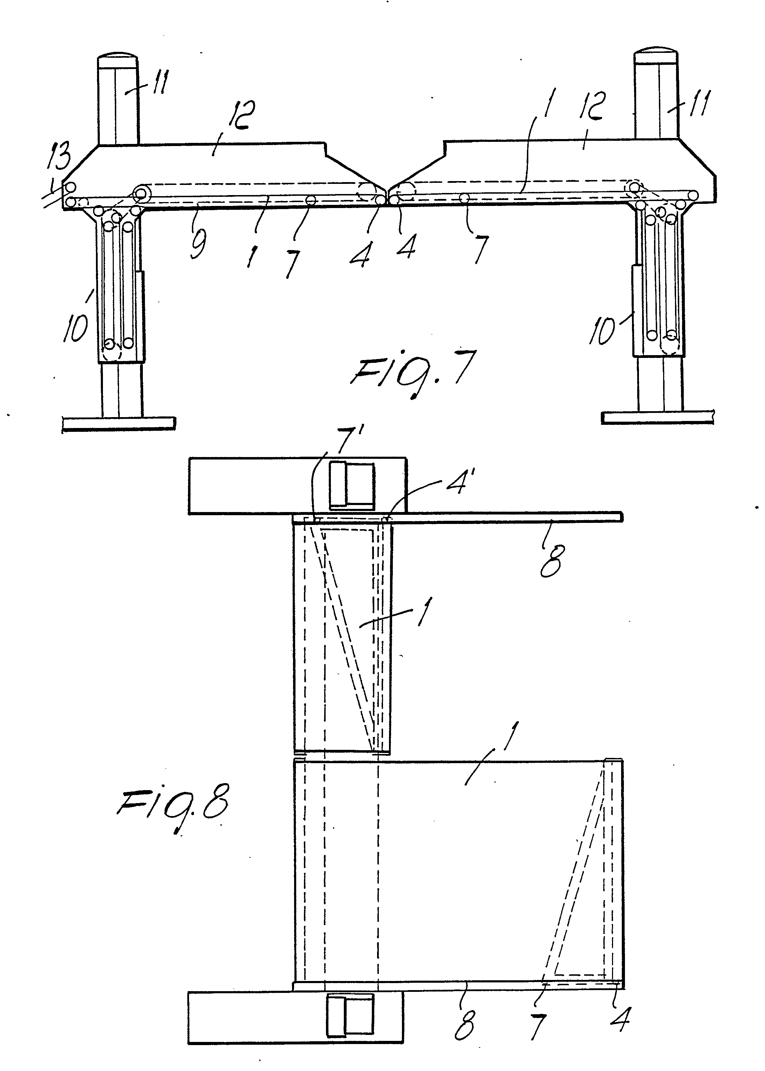

The apparatus according to the present invention can also be provided, as shown in fig.5, with two separated conveyor belts which are independent from one another with respect to the motion of the rollers supporting them.

Thus, for each apparatus, two independent tracks will be available for stacking hide pieces coming from two hide piece processing machines having two adjoining processing lines (for example hide piece painting machines).

Obviously, two apparatus may be arranged, in an opposite relationship, each having two tracks, so as to stack hide pieces of comparatively high lengths and coming from two processing lines.

In each case a photocell assembly will be provided for controlling the height of the deposited hide piece stacks and causing the stacking head to be raised, or the stacking beam or table to be lowered, which photocell assembly will afford the possibility of forming desired height stacks.

It should moreover be pointed out that the disclosed hide piece stacking apparatus affords the possibility of properly stacking hide or the like material pieces either in a dry or in a wet condition.

While the invention has been disclosed with reference to some preferred embodiments thereof, it should be apparent that the disclosed embodiments are susceptible to many modifications and variations all of which come within the scope and spirit of the appended claims.

## Claims

1 - An apparatus for automatically stacking hide pieces and the like, characterized in that it essentially comprises at least an endless belt driven by a driving roller and extending between a front roller, displaceable on a horizontal plane, and one or more coplanar rollers adapted for sliding on corresponding vertical, horizontal or slanted planes, in a timed manner with the displacement of said front roller, said apparatus further comprising means for taking the hide piece from a upward hide piece processing machine and a supplying belt for supplying said hide piece to said conveyor belt to transfer it to a stacking beam or table arranged under the horizontal portion of said conveyor belt, means being further provided for stopping said conveyor belt and causing the rollers supporting it to be backward displaced as the cross middle line of said hide piece reaches the middle line of said beam or table to deposit said hide piece thereon.

2- An apparatus, according to the preceding claim, characterized in that said conveyor belt, which slides on two horizontally arranged rollers, a transmission roller and a tension roller respectively, is supported by or extends between a front roller and one or more coplanar rollers adjoining said driving roller, said front roller forming, in cooperation with a rear roller coplanar therewith, a carriage displaceable on a horizontal plane along side guides, said carriage being entrained by motorized or driven chains, the motors driving said chains being controlled by a photoelectric assembly adapted for detecting the length of said hide piece and the position of said hide piece on said conveyor belt.

3- An apparatus, according to the preceding claim, characterized in that said coplanar rollers, during the return stroke of said carriage, are recovered or caused to return by resilient means, said apparatus further comprising vertical guides mounted on tubular structures rigidly coupled to corresponding raising uprights and cantilever wise supporting side walls for supporting said carriage sliding guides.

4- An apparatus according to claim 1, adapted to be mounted in tandem, with an opposite relationship, with a like apparatus for stacking very long hide pieces, the tandem arranged apparatus comprising two conveyor belts which are displaced in the advancing direction of the hide piece and which are stopped and displaced in an opposite direction as the cross middle line of said hide piece arrives at the middle line of the underlying hide piece stacking beam or table, that is at the symmetry axis of said tandem arranged apparatus.

5- An apparatus, according to claim 1, characterized in that it comprises two conveyor belts which are longitudinally separated from one another ant mutually indipendent both with respect to their advancing movement and the return movement of the rollers supporting them.

6- An apparatus according to claim 1, characterized in that it comprises a photocell assembly for controlling the height of the deposited hide pieces so as to cause the stacking head to raise or the stacking beam or table to lower to form a hide piece stack having the desired height.

7- An apparatus according to claim 1, characterized in that it is specifically designed for stacking both dry hide pieces and wet hide pieces.

Fig. 1

Fig. 5

EP 0 331 863 A1

Fig.2

Fig.3

Fig. 4

Fig. 6

EP 0 331 863 A1

Fig.7

Fig.8

European Patent Office

# EUROPEAN SEARCH REPORT

Application Number

EP 88 83 0093

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 281 146 (BRIDGE)<br>* The whole document * | 1 | B 65 G 57/06<br>C 14 B 1/62 |
| Y | | 2,4,6 | |
| A | | 5,7 | |
| | --- | | |
| Y | US-A-3 393 908 (GRIFFIN)<br>* Figures 1-10; column 2, line 28 - column 9, line 33 * | 2,6 | |
| A | | 1 | |
| | --- | | |
| Y | DE-A-2 945 883 (HOLSTEIN & KAPPERT)<br>* Figures 3',3; page 7, paragraph 2 - page 8, paragraph 1 * | 4 | |
| | ----- | | |

TECHNICAL FIELDS SEARCHED (Int. Cl.4)

B 65 G
C 14 B

The present search report has been drawn up for all claims

| Place of search | Date of completion of the search | Examiner |
|---|---|---|
| THE HAGUE | 08-11-1988 | WERNER D.M. |